# EUROPÄISCHE PATENTSCHRIFT

(11) **EP 1 538 131 B1**
(45) Veröffentlichungstag und Bekanntmachung des Hinweises auf die Patenterteilung: **17.02.2010**
(21) Anmeldenummer: 03027635.6
(22) Anmeldetag: 02.12.2003
(51) Int. Cl.: C03C 17/36

(54) **Temperbares Low-e-Schichtsystem; Verfahren zur Herstellung und Low-e-Glasprodukt mit Schichtsystem**
Temperable Low-e-coating system, method for fabrication and Low-e-glasproduct with layered coating
Empilement multicouche à basse émissivité trempable, procédé pour la fabrication et produit en verre à basse émissivité avec systeme multicouche

(43) Veröffentlichungstag der Anmeldung: 08.06.2005
(73) Patentinhaber: Scheuten Glasgroep, 5916 PA Venlo (NL); Semco Glastechnik GmbH, 17034 Neubrandenburg (DE)
(72) Erfinder: Villari, Valentino, Dr., 41063 Mönchengladbach (DE); Nickol, Friedrich Wilhelm, 57567 Daaden (DE)
(74) Vertreter: Jostarndt, Hans-Dieter

(56) Entgegenhaltungen:
- EP-A- 0 751 099
- EP-A- 1 174 397
- EP-A- 1 371 745
- FR-A- 2 586 245
- US-B1- 6 541 133
- US-B1- 6 572 940

## Beschreibung

Die Erfindung betrifft ein temperbares Low-e-Schichtsystem, das auf ein Substrat aufbringbar ist und einen Schichtaufbau mit wenigstens einer Silberschicht aufweist.

Die Erfindung betrifft ferner ein Verfahren zur Herstellung eines temperbaren Low-e-Schichtsystems und ein damit hergestelltes Low-e-Glasprodukt.

Beschichtete Substrate finden in diversen Technologiebereichen Anwendung. Die verwendeten Schichtsysteme dienen dazu, die optischen, chemischen und/oder mechanischen Eigenschaften von Substraten zu verbessern.

Die Erfindung bezieht sich insbesondere auf transparente Substrate, die mit einem wenigstens teilweise lichtdurchlässigen Schichtsystem versehen sind. Bei den transparenten Substraten kann es sich beispielsweise um Scheiben aus Kunststoff oder Glas handeln. Der Begriff Glas ist hier in einer allgemeinen Bedeutung anzusehen und umfasst auch glasartige Materialien wie vitrokristalline Stoffe.

Bei der Beschichtung von transparenten Substraten ist es bekannt, durch geeignete Auswahl von Mehrfachschichten ein Schichtsystem mit geringer Emissivität und gewünschten Transmissions- oder Reflektionswerten des beschichteten Substrats zu erzielen. Derartige Schichtsysteme und Glasprodukte werden mit dem Begriff "Low-e" bezeichnet, wodurch die angestrebte niedrige Emissivität des Produktes ausgedrückt wird.

Werden Low-e-Schichtsysteme beispielsweise für Isolierverglasungen genutzt, lässt sich hierdurch der U-Wert von mit derartigen Verglasungen versehenen Räumen vermindern. Die Lichtdurchlässigkeit soll dabei in beiden Richtungen nur wenig behindert werden, so dass eine hohe Lichttransmission angestrebt wird. Ferner soll die Reflexionsfarbe der Verglasung möglichst in einem großen Bereich einstellbar, bevorzugt aber farbneutral sein.

Zur Erzielung der gewünschten optischen Eigenschaften wird in einem Low-e-Schichtsystem üblicherweise wenigstens eine Funktionsschicht aus einem reflektierenden Material eingesetzt. Dabei kommt insbesondere Silber zur Anwendung. Das Gesamtsschichtsystem ist so konzipiert, dass die Durchlässigkeit für die meisten Strahlen im sichtbaren Bereich des Spektrums zugelassen wird, während der größte Teil der Infrarotstrahlung reflektiert wird.

Eine in einem Low-e-Schichtsystem eingesetzte Silberschicht ist typischerweise von wenigstens zwei weiteren Schichten umschlossen, die beispielsweise als Unterblocker und Oberblocker bezeichnet werden können. Ein transparenter Oberblocker ist erforderlich, um die Silberschicht vor chemischen und/oder mechanischen Einflüssen bei der Produktion oder bei der Verwendung von low-e-Glasprodukten zu schützen. Der Oberblocker kann ferner zum Schutz gegen UV-Strahlung eingesetzt werden. Neben weiteren Schichten wie beispielsweise Antireflexionsschichten befindet sich der Oberblocker über der Silberschicht auf der dem Substrat abgewandten Seite. Der Unterblocker befindet sich unter der Silberschicht auf der dem Substrat zugewandten Seite und verbessert die elektrischen Eigenschaften der darüber befindlichen Silberschicht. Ferner schützt der Unterblocker das Silber beispielsweise vor Diffusion von Fremdatomen, die sich in das Silber einlagern können.

Als Unter- und Oberblocker können verschiedene Schichten eingesetzt werden. Bekannt sind beispielsweise Oberblocker aus NiCrOₓ oder ZnO. Beispielsweise beschreiben die Internationale Patentanmeldung WO 00/37384 und die US-Patentschrift US 6,398,925 B1 ein Verfahren, bei dem eine Silberschicht mit einem Oberblocker aus einer ZnO-Keramik beschichtet wird, sowie die mit der ZnO-Keramikschicht beschichtete Silberschicht auf einer Glasscheibe. Die ZnO-Keramikschicht wird dabei von einem keramischen ZnO-Target abgesputtert. Als Unterblocker ist die Verwendung von ZnO ebenfalls bekannt, wie es beispielsweise in der US-Patentschrift US 5,962,115 beschrieben ist.

In zunehmendem Maße ist es erforderlich, Low-e-Schichtsysteme thermisch zu behandeln. Diese Vorspannung erhöht die Biegefestigkeit der Glasscheibe und verleiht ihr bestimmte Sicherheitseigenschaften. Bei der Herstellung und Weiterverarbeitung von Low-e-Glasprodukten besteht jedoch das Problem, dass sich ein gebildeter Schichtaufbau durch verschiedene physikalische und/oder chemische Vorgänge verändert, was zu einer Veränderung der optischen und thermischen Eigenschaften des Schichtsystems führt. Beim Tempern von Low-e-Schichtsystemen wird das System in einer bestimmten Atmosphäre erhitzt, wobei eine Diffusion von Sauerstoff in den Schichtaufbau erfolgen kann, was zu einer Oxidation der Silberschicht führt. Der Sauerstoff kann beispielsweise aus der Atmosphäre über die Oberfläche des Schichtsystems oder aus anderen Bereichen des Systems in das System und damit in die Silberschicht diffundieren. Ferner können Natriumionen oder andere Fremdatome beispielsweise aus dem Glassubstrat in den Schichtaufbau und damit ebenfalls in die Silberschicht eindringen.

Derartige Diffusionsvorgänge führen zu einer Veränderung der Reflexionsfarbe des Schichtaufbaus, da sich dadurch insbesondere die optischen und elektrischen Eigenschaften der eingesetzten Silberschicht verändern. Darüber hinaus verursacht auch die Veränderung der Kristallstruktur der Silberschicht eine Farbveränderung, den sogenannten Farbshift. Ein Schichtaufbau mit einer Silberschicht hat somit vor einem Temperprozess eine andere Farbe als nach dem Temperprozess, und dieser Farbshift ist bei der Produktion und Weiterverarbeitung von Low-e Gläsern zu berücksichtigen.

Dabei ist es bekannt, den auftretenden Farbshift auszugleichen, indem ein Schichtsystem so ausgebildet wird, dass es vor dem Tempern einen bestimmten Grad an Färbung aufweist. Der Grad der Färbung wird so eingestellt, dass sich durch den Farbshift beim anschließenden Temperprozess ein farbneutrales Glasprodukt ergibt. Derartige Verfahren haben jedoch den Nachteil, dass der Temperprozess in Öfen mit spezifischen Parametern durchgeführt werden muss, da sonst die durchgehende Farbneutralität des Endproduktes nicht verlässlich und reproduzierbar erreicht werden kann. Veränderungen der erforderlichen Parameter beispielsweise über die Fläche eines Glasproduktes führen zu Abweichungen von der Farbneutralität, wodurch ein hergestellter Schichtaufbau für die Verwendung im Glasbau unbrauchbar wird.

Die Deutsche Patentschrift DE 198 52 358 C1 schlägt zur Erreichung der gewünschten optischen Eigenschaften eines Low-e-Schichtsystems vor, das über der Silberschicht eine Al-Legierung, ein Metalloxid wie SnO₂, Bi₂O₃, TiO₂ oder ZnO und ein ZnO-haltiges Mischoxid mit Spinellstruktur als Oberblocker aufweist. Unterhalb der Silberschicht befindet sich ebenfalls ein Metalloxid aus der genannten Gruppe, ZnO oder Zn.

Aus der Deutschen Patentschrift DE 197 19 543 C1 ist ferner ein thermisch belastbares Low-e-Schichtsystem bekannt, das eine untere und eine obere Entspiegelungsschicht aus einer oder mehreren Metall- oder Halbleiterverbindungen, eine Funktionsschicht aus Silber und unmittelbar unter der Silberschicht eine Schicht aus mit A1 und Si dotiertem zinkoxid aufweist, wobei diese Schicht durch reaktive Kathodenzerstäubung aus einem metallischen Target aus einer Zn-Al-Si-Legierung hergestellt wurde.

In der älteren europäischen Anmeldung EP 1 371 745 wird ein verfahren zur Beschichtung eines Substrates mit einem Schichtsystem beschrieben, das wenigstens eine Silberschicht aufweist, Unter der Silberschicht befindet sich ein Unterblocker, der von einem keramischen ZnO-Target abgesputtert wurde, das einen Gehalt von 0-10% Al₂O₃ aufweist. Der Unterblocker wird vorzugsweise in der metallischen Phase aufgebracht und nach dem Aufbringen erfolgt eine Gastrennung, woraufhin die Silberschicht von einem Silbertarget abgesputtert wird. Aus, der Schrift ist ferner das Aufbringen einer Oberblockerschicht aus ZnO oder ZnOAl₂O₃ und das Aufbringen einer TiOₓ-Schicht oberhalb und/oder unterhalb der Silberschicht bekannt. Die Druckschrift offenbart ferner eine SnO₂-Schicht unterhalb eines ZnO-Blockers.

Die Druckschrift EP 1 179 397 A1 beschreibt einen beschichteten Gegenstand wie beispielsweise eine Windschutzscheibe, der wärmebehandelt werden kann. Der Gegenstand weist ein Doppelsilber-Low-E-Schichtsystem auf, das unterhalb und oberhalb der Silberschicht eine Schicht aus einem wenigstens teilweise oxidierten Material aufweist. Bei dem Material handelt es sich vorzugsweise um Nickel. Dazu ist angegeben, dass auch andere Materialien verwendet werden können, welche jedoch nicht spezifiziert sind. Die Kontaktschichten aus oxidiertem Material, welche die Silberschichten berühren, sind so ausgestaltet, dass ihre Oxidation zur Silberschicht hin abnimmt. Dadurch sind die Schichten an den Kontaktflächen leitend oder wenigstens halbleitend, was sich positiv auf Veränderungen durch eine Wärmebehandlung auswirken soll. Die oxidierten Bereiche der Schichten weisen dagegen eine hohe Transparenz im sichtbaren Bereich auf. Das Schichtsysteme weist ferner dielektrische Schichten vorzugsweise aus Siliziumnitrid auf, es können jedoch auch TiOₓ, SiOₓ, Nb₂O₅, SnOₓ oder ZnOₓ eingesetzt werden. Die offenbarten Low-E-Schichtsysteme können beispielsweise getempert werden, wobei kein signifikanter Sprung im Schichtwiderstand R₈ entstehen soll.

Die Druckschrift US 6,541,33 B1 beschreibt ein Schichtsystem für transparente Substrate, bei dem eine Metalloxidechicht als obere oder untere Antireflektionsschicht, als Diffusionsaperrschicht, als Unterschicht einer Antireflektionsschicht oder als Deckschicht verwendet werden kann. Die Metalloxidschicht wird vorzugsweise durch reaktives Sputtern aufgebracht und enthält Zn-Oxid und Sn-Oxid mit möglichen Zusätzen beispielsweise an Aluminium. Zur Verwendung dieser Zn₂SnO₄-Schicht sind Beispiele für Schichtsysteme angegeben, bei denen sich über einem Glassubstrat und/oder über einer Silberschicht eine SnO₂-Schicht befindet. Oberhalb der Silberschicht kann ferner eine TiO₂-Schicht angeordnet sein, während als Unter- und Oberblocker vorzugsweise CrNi oder ZnO verwendet wird. Die offenbarten Ausführungsbeispiele umfassen kein Schichtsystem, bei dem sich zwischen einem Substrat und einer Silberschicht eine Zn₂SnO₄-Schicht befindet, jedoch offenbart beispielsweise der Anspruch 10 ein Doppelsilberschichtsystem, bei dem zwischen den beiden Silberschichten eine Zn₂SnO₄-Schicht angeordnet ist.

Aufgabe der Erfindung ist es, ein temperbares Low-e-Schichtsystem aufbringbar auf ein Substrat bereitzustellen, das nach einem Temperprozess eine geringe Emissivität und eine hohe Lichttransmission aufweist, wobei der Schichtaufbau nach dem Temperprozess farbneutral ist und einen niedrigen Flächenwiderstand R aufweist. Insbesondere soll das Schichtsystem in einem weiten, für das Härten von Glas relevanten, Temperaturbereich eine hohe Konstanz bezüglich seiner Eigenschaften aufweisen. Damit soll erreicht werden, dass auch bei unterschiedlichen Ofenparametern reproduzierbare Schichteigenschaften erzielt werden.

Aufgabe der Erfindung ist es dabei, einen Schichtaufbau bestehend aus verschiedenen Materiallagen zu definieren, der ... die Eindiffusion von Fremdatomen von außen in das Schichtsystem und die Diffusion der verschiedenen Materialien des Schichtsystems untereinander so weit wie möglich verhindert.

Aufgabe der Erfindung ist es ferner, ein Verfahren zur Herstellung eines solchen Schichtsystems und zur Verwendung für ein Low-e-Glasprodukt bereitzustellen.

Erfindungsgemäß wird diese Aufgabe durch die Merkmale der Ansprüche 1, 5, 18, 20, 23, 26 und 27 gelöst. Vorteilhafte Weiterbildungen der Erfindung finden sich in den Unteransprüchen.

Das erfindungsgemäße temperbare Low-e-Schichtsystem ist auf ein Substrat aufbringbar und weist einen Schichtaufbau mit wenigstens einer Silberschicht auf. Zwischen Substrat und Silberschicht sind wenigstens eine Diffusionssperrschicht, eine erste Entspiegelungsschicht und ein Unterblocker angeordnet, und von dem Substrat ausgehend über der Silberschicht sind wenigstens ein Oberblocker und eine zweite Entspiegelungsschicht angeordnet. Dabei weist die erste Entspiegelungsschicht einen höheren Brechungsindex auf als die zweite Entspiegelungsschicht. Der Hauptbestandteil des Unterblockers und des Oberblockers ist ZnOₓ, wobei Aluminium dotiertes ZnOₓ (ZnAlOₓ) bevorzugt ist. Dies bedeutet, dass die Schicht zu mehr als 50% aus ZnOₓ besteht.

Die Diffusionssperrschicht besteht zu wenigstens 50% aus SnOₓ. Es hat sich als besonders vorteilhaft erwiesen, eine Diffusionssperrschicht aus nahezu 100% SnOₓ einzusetzen, aber auch Mischungen aus wenigstens 50% SnOₓ und einem Restbestandteil aus ZnOₓ führen zu einem Schichtsystem, welches die Aufgabe der Erfindung erfüllt. Bei dem Restbestandteil ZnOₓ handelt es sich vorzugsweise ebenfalls um Aluminium dotiertes ZnOₓ, so dass die Schicht in einem besonders bevorzugten Ausführungsbeispiel der Erfindung aus ZnSnAlOₓ besteht. Oberhalb des Oberblockers und der zweiten Entspiegelungsschicht kann eine Schutzschicht aus ZnSnAlOₓ angeordnet sein. In einer weiteren vorteilhaften Ausführungsform der Erfindung bestehen sowohl der Unterblocker und der Oberblocker als auch die Diffusionssperrschicht aus ZnOₓ, wobei ebenfalls ZnAlOₓ bevorzugt ist.

Die erste Entspiegelungsschicht zwischen Substrat und Silberschicht besteht aus TiO₂ und hat eine Dicke von 5-55nm, vorzugsweise von 10-25nm. Der Brechungsindex dieser ersten Entspiegelungsschicht liegt bei 2,5. Über der ersten Entspiegelungsschicht aus TiO₂ befindet sich eine SnOₓ-Schicht, die als innere Diffusionssperrschicht wirkt. Die zweite Entspiegelungsschicht über der Silberschicht besteht aus SnO₂ und hat eine Dicke von 20-60nm, vorzugsweise von 25-45nm. Der Brechungsindex dieser zweiten Entspiegelungsschicht liegt in einem bevorzugten Ausführungsbeispiel der Erfindung bei etwa 2.

Von der Erfindung umfasst sind ferner Doppelsilberschichtsysteme, bei denen sich oberhalb des Oberblockers und der zweiten Entspiegelungsschicht eine zweite Silberschicht befindet. Unter der zweiten Silberschicht befindet sich vorzugsweise ein zweiter Unterblocker aus ZnAlOₓ. Über der zweiten Silberschicht befinden sich analog ein zweiter Oberblocker, eine dritte Entspiegelungsschicht und eine Schutzschicht. Die bevorzugten Materialien entsprechen den bereits beschriebenen Materialien des Einfachsilbersystems.

Die Erfindung umfasst ferner ein Verfahren zur Herstellung eines temperbaren Low-e-Schichtsystems auf einem Substrat, bei dem ein Substrat bereitgestellt wird, auf das die verschiedenen Funktionsschichten aufgebracht werden. Das Verfahren umfasst das Bereitstellen eines Substrats und das Aufbringen einer Diffusionssperrschicht, die zu wenigstens 50% aus SnOₓ besteht. Ferner werden eine erste Entspiegelungsschicht, eine innere Diffusionssperrschicht aus SnOₓ und ein Unterblocker aufgebracht, wobei der Hauptbestandteil des Unterblockers ZnOₓ ist. Das Verfahren umfasst ferner das Aufbringen einer Silberschicht und eines Oberblockers, dessen Hauptbestandteil ZnOₓ. Darüber hinaus wird eine zweite Entspiegelungsschicht aufgebracht, wobei die erste Entspiegelungsschicht einen höheren Brechungsindex aufweist als die zweite.

Es hat sich als zweckmäßig erwiesen, die einzelnen Schichten des Systems durch Sputtern aufzubringen. Insbesondere die Diffusionssperrschicht und/oder die Blockerschichten werden vorzugsweise durch Sputtern abgeschieden. Handelt es sich dabei um ZnAlOₓ-Schichten, ist das Sputtern von einem Aluminium dotierten ZnOₓ-Target (ZAO-Target) vorteilhaft. Werden zur weiteren Verbesserung der Hochtemperaturstabilität ZnSnOₓ- bevorzugt aber ZnSnAlOₓ-Schichten eingesetzt, kann die jeweilige Schicht metallisch von einem Aluminium dotierten ZnSn- oder ZnSnAl-Target abgesputtert werden. Auch SnOₓ-Schichten werden vorzugsweise metallisch von einem Target abgesputtert.

Die Erfindung umfasst ferner ein Low-e-Glasprodukt mit dem beschriebenen Schichtsystem auf einem Substrat. Das Schichtsystem kann zu einem Glasprodukt getempert werden, welches die angestrebten Eigenschaften ausweist. Es kann jedoch auch ungetempert eingesetzt werden, da auch der unbehandelte Schichtaufbau bereits zu vorteilhafte Eigenschaften hat. Beispielsweise lässt sich bereits bei dem ungetemperten Schichtaufbau bei neutraler Reflektion und Transmission gegenüber herkömmlichen Low-e-Produkten eine Erhöhung der Transmission um etwa 2% auf ≥89% erkennen. Die normale Emission εₙ liegt bei diesen ungehärteten Produkten bei etwa 4%.

Nach einem Temperprozess führt das erfindungsgemäße Schichtsystem zu einem farbneutralen Glasprodukt mit einer geringen Emissivität. Die erreichten normalen Emissivitäten liegen dabei in Abhängigkeit von der Wahl der Dicken der Silber- und Entspiegelungsschichten im Bereich von εₙ=2-4%. Gleichzeitig weist das getemperte Schichtsystem eine hohe Transmission von ≥90% auf. Dabei wird die Herstellung eines farbneutralen Glasproduktes dadurch erleichtert, dass der Farbshift beim Tempern wesentlich reduziert wird. Das Schichtsystem hat ferner den Vorteil, dass ein durchzuführender Temperprozess nicht in Öfen mit sehr engen Parametern erfolgen muss, um ein reproduzierbares Produkt zu erreichen. Die Eigenschaften des Schichtsystems sind vielmehr in einem für die Härtung von Glas relevanten Temperaturbereich weitestgehend konstant, so dass Abweichungen von bestimmten Parametern nicht zu einer gravierenden Qualitätsminderung des Produkts führen. Die Herstellung von getemperten Glasprodukten wird so wesentlich erleichtert.

Ein von einem ZAO-Target abgesputterter Unterblocker wirkt ferner unterhalb der Silberschicht als Keimschicht, die das kristalline Wachstum der Silberschicht fördert, was sich vorteilhaft auf den Herstellungsprozess des Schichtsystems auswirkt. Die Dotierung von Aluminium zu einem ZnOₓ-Target bringt ferner den Vorteil mit sich, dass die Sputtereigenschaften verbessert werden, so dass das Material weniger zum sogenannten Arcing neigt. Ferner kann die Dicke der Silberschicht reduziert werden, wodurch eine Kostenreduktion bei der Herstellung von Low-e-Verglasungen erreicht werden kann.

Die Einbettung der ersten Entspiegelungsschicht aus TiO₂ zwischen der Diffusionssperrschicht und einer SnO₂-Schicht dient dem Schutz der TiO₂-Schicht beim Tempern. So wird das Titanoxid konserviert und kann beispielsweise nicht in die Silberschicht diffundieren. Auch die Diffusion des Zinks aus dem Unterblocker in die TiOₓ-Schicht wird so verhindert. Dies ist erforderlich, da sich der Unterblocker durch ein Übergehen von Zn in die TiOₓ-Schicht auflösen würde und somit unter der Silberschicht keine Keim- und Schutzschicht mehr zur Verfügung stünde. Durch den erfindungsgemäßen Schichtaufbau werden somit nicht nur Natriumionen daran gehindert, aus dem Glassubstrat in das Schichtsystem einzudringen, sondern er bewirkt auch eine Konservierung der TiOₓ-Schicht. Erst dadurch kann der hohe Brechungsindex der TiOₓ-Schicht auch nach einem Temperprozess vorteilhaft genutzt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein besonders bevorzugtes Ausführungsbeispiel des erfindungsgemäßen Low-e-Schichtaufbaus;
- Fig. 2: die Veränderung des Flächenwiderstands des erfindungsgemäßen Schichtsystems bei einer thermischen Behandlung im Vergleich zu anderen Schichtsystemen;
- Fig. 3: die Trübung des erfindungsgemäßen Schichtsystems bei einer thermischen Behandlung im Vergleich zu anderen Schichtsystemen; und
- Fig. 4: den Farbshift des erfindungsgemäßen Schichtsystems bei einer thermischen Behandlung im Vergleich zu anderen Schichtsystemen.

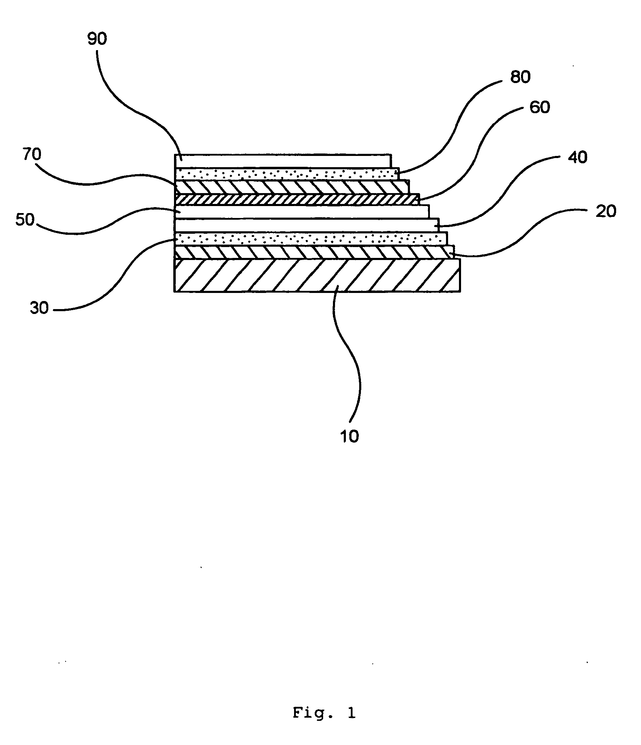

Fig. 1 zeigt ein besonders bevorzugtes Ausführungsbeispiel des erfindungsgemäßen Low-e-Schichtsystems. Dargestellt ist folgende besonders bevorzugte Schichtfolge:

| | | |
|---|---|---|
| 10 | Substrat | (1,5-20mm) |
| 20 | SnOₓ, ZnAlOₓ oder ZnSnAlOₓ | (5-15nm) |
| 30 | TiO₂ | (5-55nm) |
| 40 | SnO₂ | (5-15nm) |
| 50 | ZnAlOₓ | (5-10nm) |
| 60 | Ag | (8-17nm) |
| 70 | ZnAlOₓ | (4-25nm) |
| 80 | SnO₂ | (20-60nm) |
| 90 | ZnSnAlOₓ | (5-15nm) |

Dabei ist wesentlich, dass es sich um einen asymmetrischen Schichtaufbau handelt, bei dem zwischen einem Substrat 10 und einer Silberschicht 60 eine erste Entspiegelungsschicht 30 mit einem relativ hohen Brechungsindex und über dem Silber eine zweite Entspiegelungsschicht 80 mit einem niedrigeren Brechungsindex angeordnet ist. Das Substrat 10 ist transparent, und es handelt sich vorzugsweise um ein Glassubstrat. Typische Dicken des Substrats liegen zwischen 1,5-20mm.

Bei der ersten Entspiegelungsschicht 30 handelt es sich vorzugsweise um eine TiO₂-Schicht. Es können auch andere geeignete Materialien wie beispielsweise Nb₂O₃ und deren Mischoxide wie beispielsweise TiNbOₓ eingesetzt werden. Der Brechungsindex der ersten Entspiegelungsschicht liegt in der Größenordnung von 2,2 bis 2,6, bevorzugt ist ein Brechungsindex von etwa 2,5. Durch dieses hochbrechende Material in der Grundschicht lassen sich dickere Silberschichten so entspiegeln, dass der a*-Wert im L*a*b*-System negativ ist und somit keine unerwünschte Färbung im positiven a*-Bereich erzeugt wird. Die zweite Entspiegelungsschicht 80 besteht vorzugsweise aus SnO₂ und weist einen Brechungsindex in der Größenordnung von 1,9 bis 2,1 auf, wobei ein Brechungsindex von etwa 2 bevorzugt ist. Die Dicke der zweiten Entspiegelungsschicht liegt vorzugsweise zwischen 25-35nm.

Die Verwendung von TiO₂ als erste Entspiegelungsschicht unter dem Silber bringt den Nachteil mit sich, dass TiO₂ im Hochtemperaturverhalten die Diffusion von Na-Ionen in das Schichtsystem nur wenig unterdrückt. Die Diffusion von Na-Ionen aus dem Glassubstrat kann demnach nicht ausreichend unterbunden werden. Um die optischen Vorteile des hohen Brechungsindexes von TiO₂ dennoch einsetzen zu können, ist erfindungsgemäß vom Substrat 10 ausgehend zwischen dem Substrat und der TiO₂-Schicht 30 eine Diffusionssperrschicht 20 vorgesehen. Die Diffusionssperrschicht besteht vorzugsweise aus SnOₓ, ZnSnOₓ oder ZnSnAlOₓ. Diese Schicht wird dabei vorrangig als Diffusionssperre eingesetzt, während eine Entspiegelungsfunktion nicht im Vordergrund steht.

Da die Schicht weniger zur Entspiegelung dient, sondern für diese Funktion andere speziell ausgelegte Schichten dienen, können geringere Schichtdicken realisiert werden, als dies beispielsweise bei herkömmlichen ZnOₓ- oder ZnSnAlOₓ-Schichten unterhalb einer Silberschicht der Fall ist. Typische Dicken für ZnOₓ- bzw. ZnSnAlOₓ-Schichten unterhalb einer Silberschicht liegen in der Größenordnung von 25-50nm, während die Dicke der Diffusionssperrschicht 20 vorzugsweise in der Größenordnung von 5-15nm liegt.

Es hat sich als besonders zweckmäßig erwiesen, die Diffusionssperrschicht 20 durch Sputtern aufzubringen, wobei je nach Schichtmaterial metallische oder keramische Targets eingesetzt werden. Auch die Sputterverfahren können je nach Schichtmaterial variiert werden. Für das Sputtern einer SnOₓ-, ZnSnOₓ- oder ZnSnAlOₓ-Schicht ist das reaktive DC-Sputtern von einem entsprechenden metallischen Target vorteilhaft, während für eine ZnAlOₓ-Schicht das Sputtern von einem keramischen Target (ZAO-Target) nicht-reaktiv im DC-Verfahren zweckmäßig ist.

Über der TiOₓ-Schicht befindet sich eine SnOₓ-Schicht 40 und direkt unterhalb der Silberschicht 60 ist ein Unterblocker 50 angeordnet. Die SnOₓ-Schicht verhindert die Diffusion von TiOₓ in ZnAlOₓ und umgekehrte Diffusionsvorgänge und dient damit dem Erhalt der Eigenschaften der unteren Entspiegelungsschicht, des Unterblockers und der Silberschicht. Der Unterblocker besteht vorzugsweise aus ZnAlOₓ und wird zweckmäßigerweise ebenfalls keramisch von einem ZAO-Target abgesputtert.

Wird keine Diffusionssperrschicht 20 direkt über dem Substrat angeordnet, können Natriumionen in das Schichtsystem eindringen, werden aber durch die innere Diffusionssperrschicht 40 an der Diffusion in den Unterblocker 50 und in die Silberschicht gehindert. Erfindungsgemäß werden jedoch zwei Sperrschichten in Form der Diffusionssperrschicht 20 und der inneren Diffusionssperrschicht 40 eingesetzt, so dass sowohl die Diffusion aus dem Glassubstrat heraus als auch die Diffusion in die Silberschicht hinein effektiv verhindert werden kann.

Erfindungsgemäß ist über der Silberschicht ein Oberblocker 70 angeordnet. Diese Schicht besteht vorzugsweise ebenfalls aus ZnAlOₓ, das von einem keramischen ZAO-Target abgesputtert wurde. Die Dicke des Oberblockers liegt in der Größenordnung von 2-25nm. Die Verwendung einer ZnAlOₓ-Schicht als Oberblocker bewirkt gegenüber herkömmlichen Blockern beispielsweise aus NiCrOₓ eine wesentliche Verbesserung der Eigenschaften des Schichtsystems, da sie beim Temperprozess die Diffusion von Sauerstoff und anderen Atomen in das Silber effektiv verhindert.

Über dem Oberblocker 70 ist die zweite Entspiegelungsschicht 80 angeordnet und darüber können weitere Funktionsschichten abgeschieden sein. Dazu zählt wenigstens eine harte Schutzschicht 90 zum Schutz des Schichtsystems gegen mechanische und chemische Einflüsse. Diese Deckschicht kann beispielsweise aus ZnSnAlOₓ bestehen, das von einem metallischen Target abgesputtert wurde.

Von der Erfindung umfasst sind ferner Doppelsilbersysteme mit wenigstens zwei Silberschichten. Die Schichtfolge bei einem Doppelsilbersystem ist beispielsweise folgende:

Substrat/SnOₓ/TiOₓ/SnOₓ/ZnAlOₓ/Ag/ZnAlOₓ/SnOₓ/ (ZnSnAlOₓ) / ZnAlOₓ/Ag/ZnAlOₓ/SnOₓ/ZnSnAlOₓ

Der Schichtaufbau zwischen Substrat und der ersten Silberschicht entspricht dem Schichtaufbau beim Einfachsilbersystem, wobei die erste Diffusionssperrschicht über dem Substrat alternativ zu SnOₓ ebenfalls aus ZnAlOₓ, ZnSnOₓ oder ZnSnAlOₓ bestehen kann. Über der ersten Silberschicht befindet sich der erste Oberblocker aus ZnAlOₓ und darauf folgt die zweite Entspiegelungsschicht aus SnOₓ. Auf die ZnSnAlOₓ-Schutzschicht des Einfachsilbersystems über dieser zweiten Entspiegelungsschicht kann aus technischer Sicht auch verzichtet werden. Auf die zweite Entspiegelungsschicht folgt dann ein zweiter Unterblocker in Form einer ZnAlOₓ-Schicht. Darüber wird eine zweite Silberschicht, ein zweiter Oberblocker aus ZnAlOₓ, eine dritte Entspiegelungsschicht aus SnOₓ und schließlich eine Schutzschicht aus ZnSnAlOₓ aufgebracht.

Zur Aufbringung der Schichten des Schichtsystems können verschiedene bekannte Verfahren zur Deposition von Material auf einem Substrat zur Anwendung kommen. Bei den Verfahren handelt es sich beispielsweise um CVD- oder PVD-Verfahren. In einem besonders bevorzugten Ausführungsbeispiel der Erfindung werden die einzelnen Schichten des Aufbaus durch Sputterverfahren aufgebracht.

Durch den beschriebenen Schichtaufbau auf einem Substrat kann ein Low-e-Schichtsystem zur Verwendung im Glasbau erzeugt werden, das bei einem Temperprozess einen reproduzierbaren Farbshift durchläuft. Der produktionsbedingte Farbshift, der unter Anderem durch die Kristallisation des Silbers bewirkt wird, ist so definiert, dass eine neutrale Schicht problemlos eingestellt werden kann.

Es konnte festgestellt werden, dass sich der Flächenwiderstand des Glasproduktes beim Tempern verringerte, während er sich bei bekannten Schichtsystemen typischerweise erhöht. Durch die Verringerung des Flächenwiderstands verringert sich der U-Wert des Glasproduktes ebenfalls, was für die Herstellung von Verglasungseinheiten besonders vorteilhaft ist. Der besondere Vorteil des hier beschriebenen Schichtsystems liegt darin, dass wegen des asymmetrischen Schichtaufbaus die Silberschicht nicht reduziert und der Flächenwiderstand erhöht werden muss, um nach dem Temperprozess ein farbneutrales Produkt zu erhalten. Es lassen sich sogar noch dickere Silberschichten nach dem Temperprozess farbneutral entspiegeln, so dass die durch den Temperprozess verbesserte elektrische Leitfähigkeit des Silbers den verbesserten Produkteigenschaften voll zugute kommt. Je nach Anwendung lassen sich Emissivitäten von ∈ₙ=2-4% erzielen.

Die folgenden Tabellen zeigen die Veränderung des Flächenwiderstands R[Ω], der Trübung und des Farbshifts dE für verschiedene Schichtsysteme a), b) und c) unter verschiedenen Bedingungen. Alle untersuchten Schichtsysteme wiesen ZnAlOₓ-Oberblocker über der Silberschicht auf, während die Diffusionssperrschicht variierte. Der übrige Schichtaufbau entspricht dem beschriebenen Aufbau eines Einfachsilbersystems wie in Fig.1. Der ZnAlOₓ-Oberblocker wurde dabei von einem keramischen ZAO-Target abgesputtert.

Der Schichtaubau a) weist eine ZnAlOₓ-Diffusionsperrschicht auf, die ebenfalls von einem keramischen ZAO-Target abgesputtert wurde. Die Zusammensetzung der Schicht in Gew.-% liegt etwa bei 98% Zink und 2% Aluminium. Der Schichtaufbau in b) weist eine SnOₓ-Diffusionssperrschicht auf, welche von einem metallischen Target abgesputtert wurde. Der Schichtaufbau in c) weist eine ZnSnAlOₓ-Diffusionssperrschicht auf, die ebenfalls von einem metallischen Target abgesputtert wurde. Die Zusammensetzung der Schicht in Gew.-% liegt etwa bei 68% Zink, 30% Zinn und 1,2% Aluminium.

Tabelle 1 stellt die ermittelten Werte bei einem Temperprozess in einem ESG-Ofen dar.

**Tabelle 1**

| Probe | Diffusionssperrschicht | Rᵥₒᵣ [Ω] | R_{nach} [Ω] | ΔR[Ω] |
|---|---|---|---|---|
| a) | ZnAlOₓ | 4,23 | 2,60 | -1,63 |
| b) | SnOₓ | 4, 11 | 2, 62 | -1,49 |
| c) | ZnSnAlOₓ | 4,14 | 2,50 | -1,64 |

Tabelle 2 stellt die ermittelten Werte bei einem Temperprozess bei 620°C und einer Plateauzeit von 10 min in einem Muffelofen dar. Zusätzlich wurden die Trübung und der Farbshift dE ermittelt.

**Tabelle 2**

| Probe | Diffusionssperrschicht | Rᵥₒᵣ [Ω] | R_{nach} [Ω] | Δ[Ω] | Trübung [%] | dE |
|---|---|---|---|---|---|---|
| a) | ZnAlOₓ | 4,09 | 2,92 | -1,17 | 0,11 | 6,99 |
| b) | SnOₓ | 4,03 | 2,87 | -1,16 | 0,30 | 5,19 |
| c) | ZnSnAlOₓ | 4,05 | 2,80 | -1,25 | 0,08 | 7,22 |

Tabelle 3 stellt die ermittelten Werte bei einem Temperprozess bei 650°C und einer Plateauzeit von 10 min in einem Muffelofen dar. Zusätzlich wurden ebenfalls die Trübung und der Farbshift dE ermittelt.

**Tabelle 3**

| Probe | Diffusionssperrschicht | Rᵥₒᵣ [Ω] | R_{nach} [Ω] | ΔR[Ω] | Trübung [%] | dE |
|---|---|---|---|---|---|---|
| a) | ZnAlOₓ | 4,12 | 3,57 | -0,55 | 0,54 | 9,05 |
| b) | SnOₓ | 3,99 | 2,98 | -1,01 | 0,73 | 6,39 |
| c) | ZnSnAlOₓ | 4,13 | 3,05 | -1,08 | 0,31 | 7,81 |

Aus den Tabellen ist ersichtlich, dass durch alle Kombinationen von Diffusionssperrschichten mit einer ZnAlOₓ-Schicht als Oberblocker eine Verringerung des Flächenwiderstands R beim Temperprozess stattfindet, so dass der erfindungsgemäß gewählte Oberblocker einen positiven Einfluss auf die angestrebten Eigenschaften des Schichtsystem hat. Eine Diffusionssperrschicht zwischen Substrat und Silberschicht kann diesen positiven Effekt noch verstärken. Dabei ist für alle Ofenbedingungen festzustellen, dass der Farbshift bei einer SnOₓ-Schicht am geringsten ist. Die Trübung ist bei dieser Schicht dagegen am höchsten.

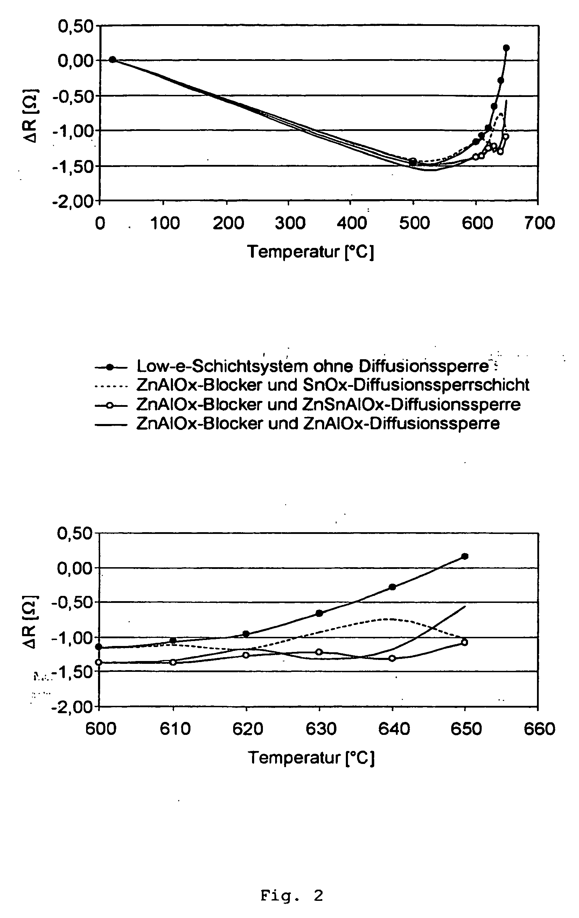

In Fig. 2 ist die Veränderung des Flächenwiderstands ΔR für verschiedene Low-e-Schichtsysteme aufgetragen über die Temperatur beim Temperprozess in zwei Abbildungen dargestellt. In der oberen Abbildung ist der Temperaturbereich von 0-650°C und in der unteren Abbildung ein eingeschränkter Bereich von 600-650°C aufgetragen. Dabei stellt die Kurve mit den ausgefüllten Messpunktkreisen ein Standard Low-e-Schichtsystem ohne Diffusionssperre aber mit ZnAlOₓ Oberlocker dar, bei welchem der Flächenwiderstand wie bei allen anderen Schichtsystemen im Laufe des Prozesses zuerst stark abfällt und dann ab etwa 550°C wieder stark ansteigt, so dass am Ende der Messung eine Vergrößerung des Widerstands festzustellen ist. Der zweiten Abbildung ist zu entnehmen, dass der Anstieg des Widerstands sehr konstant ist, und zwischen 600°C und 650°C eine starke Änderung von etwa -1,2 auf +0,2 erfolgt. Dies bedeutet, dass eine leichte Änderung der Temperatur eine gravierende Änderung des Flächenwiderstands bedeutet.

Beim Schichtsystem mit einer ZnAlOₓ-Diffusionssperre (durchgezogene Linie) steigt der Flächenwiderstand durch den Temperprozess nicht an, sondern er ist nach dem Prozess geringer als vorher. Wird der Flächenwiderstand als Maß für die Güte des zu produzierenden Glasprodukts genommen, bedeutet seine Absenkung eine Verbesserung des Glasprodukts durch Verwendung einer ZnAlOₓ-Diffusionssperre. Der zweiten Abbildung ist zu entnehmen, dass die Änderung des Flächenwiderstands in einem Bereich von 600°C bis 640°C weitestgehend konstant ist, bevor sie dann ab 640°C ansteigt. Änderungen der Temperatur in diesem Bereich verändern den Flächenwiderstand demnach nur geringfügig, wodurch eine gute Reproduzierbarkeit von Schichtsystemen mit ZnAlOₓ-Diffusionssperre erreicht wird.

Eine ZnSnAlOₓ-Diffusionssperre, wie sie durch eine Linie mit ungefüllten Messpunktkreisen dargestellt ist, verringert den Flächenwiderstand nach dem Temperprozess ebenso weit wie eine SnOₓ-Diffusionssperre, die mit einer gestrichelten Linie dargestellt ist. Die Reduzierung durch diese Schichten ist gegenüber den anderen Schichtsystemen am stärksten, wobei festzustellen ist, dass beide Kurven in dem Bereich zwischen 600-650°C weitestgehend konstant sind.

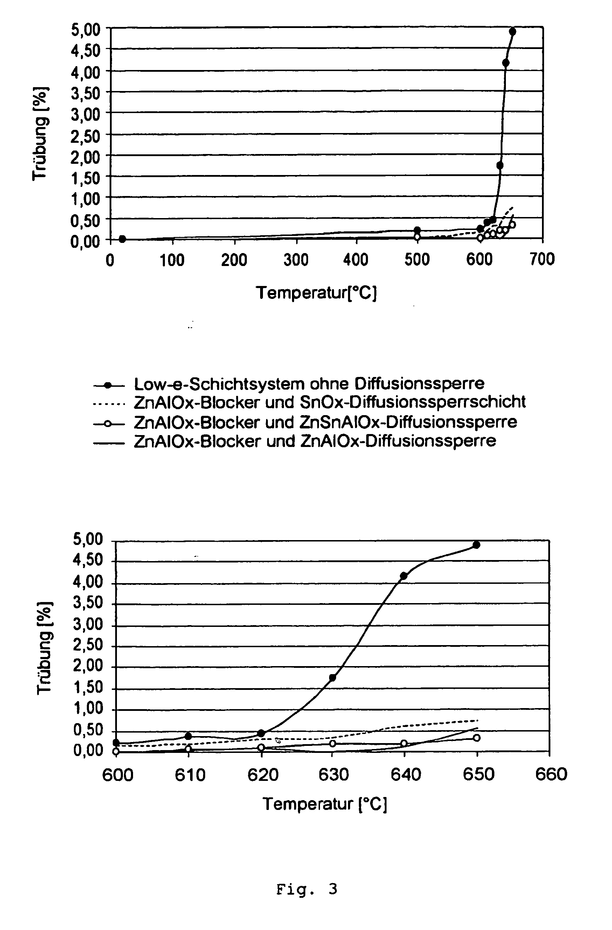

In Fig. 3 ist die Trübung in % für die genannten Low-e-Schichtsysteme in zwei Abbildungen dargestellt. In der oberen Abbildung ist wiederum der Temperaturbereich von 0-650°C und in der unteren Abbildung ein eingeschränkter Bereich von 600-650°C aufgetragen. Das Standard-Low-E-Schichtsystem ohne Diffusionssperre aber mit ZnAlOₓ-Oberlocker führt zu einer starken Erhöhung der Trübung nach dem Temperprozess, während die anderen Schichtsysteme eine weitaus geringere Trübung verursachen. Da die Trübung die Qualität eines Glasprodukts beeinträchtigt, stellen die angegebenen Alternativschichtsysteme eine deutliche Verbesserung dar. Dabei ist festzustellen, dass sich die Trübung in einem Bereich zwischen 600-650°C nur geringfügig verändert, was wiederum eine gute Reproduzierbarkeit des Glasprodukts mit sich bringt. Herkömmliche Systeme ohne Diffusionssperre erfahren dagegen im Verlauf des Temperprozesses einen starken Anstieg der Trübung, so dass eine leichte Änderung der Temperatur zu einer Trübung führen kann, welche das Glasprodukt unbrauchbar macht.

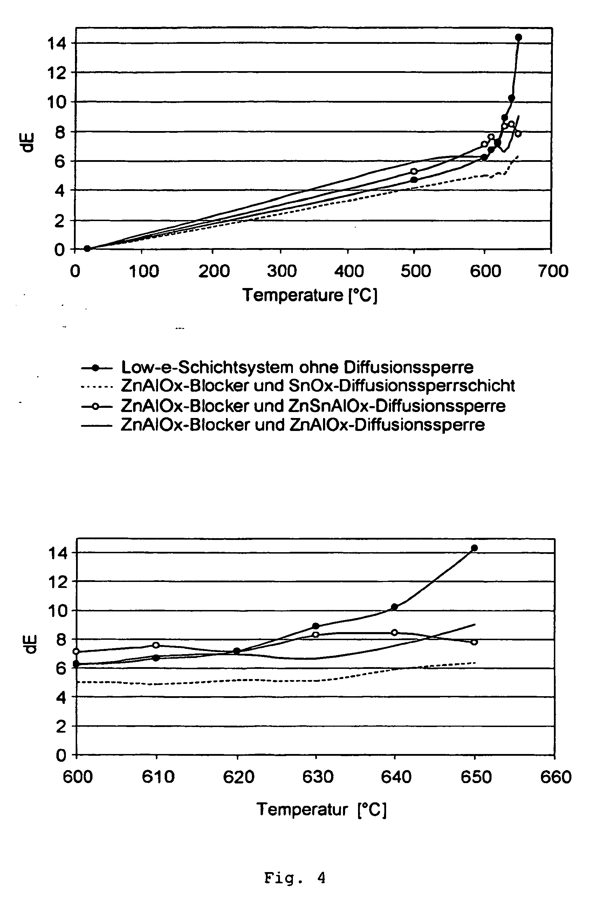

In Fig. 4 ist der Farbshift dE für die verschiedenen Schichtsysteme in zwei Abbildungen aufgetragen. Die Standard-Low-e-Schicht erfährt wiederum den stärksten Farbshift, während alle Schichtsysteme mit Diffusionssperre insbesondere im Temperaturbereich zwischen 600-650°C einen geringeren Farbshift durchlaufen. Ohne starken Anstieg sind auch diese Verläufe über die Temperatur weitaus konstanter, was wiederum die Reproduzierbarkeit unterstützt. Dabei ist festzustellen, dass die SnOₓ-Diffusionssperrschicht den weitaus geringsten Farbshift mit sich bringt.

Alle Figuren machen deutlich, dass das erfindungsgemäße Low-e-Schichtsystem auf einem Substrat in einem für das Härten von Glas relevanten Temperaturbereich eine hohe Konstanz bezüglich seiner Eigenschaften aufweist. Damit wird erreicht, dass auch bei unterschiedlichen Ofenparametern reproduzierbare Schichteigenschaften erzielt werden können.

### Bezugszeichenliste:

- 10: Substrat
- 20: Diffusionssperrschicht
- 30: Erste Entspiegelungsschicht
- 40: Innere Diffusionssperrschicht, SnO₂-Schicht
- 50: Unterblocker
- 60: Silberschicht
- 70: Oberblocker
- 80: Zweite Entspiegelungsschicht
- 90: Schutzschicht

## Patentansprüche

1. Temperbares Low-e-Schichtsystem, das auf ein Substrat (10) aufbringbar ist und einen Schichtaufbau mit wenigstens einer Silberschicht (60) aufweist, **dadurch gekennzeichnet, dass** von dem Substrat (10) ausgehend unter der Silberschicht (60) wenigstens eine Diffusionasperrschicht (20), eine erste Entspiegelungsschicht (30), eine innere Diffusionssperrschicht (40) aus SnOₓ und ein Unterblocker (50) angeordnet sind, und von dem Substrat (10) ausgehend über der Silberschicht (60) wenigstens ein Oberblocker (70) und eine zweite Entspiegelungsschicht (80) angeordnet sind, wobei die erste Entspiegelungsschicht (30) einen höheren Brechungsindex aufweist als die zweite Entspiegelungsschicht (80), der Hauptbestandteil sowohl des Unterblockers (50) als auch des Oberblockers (70) ZnOₓ ist und die Diffusionssperrschicht (20) zu wenigstens 50% aus SnOₓ besteht oder ihr Hauptbestandteil ZnOₓ ist.

2. Temperbares Schichtsystem nach Anspruch 1, **dadurch gekennzeichnet, dass** die Diffusionssperrschicht (20) zu 100% aus SnOₓ besteht.

3. Temperbares Schichtsystem nach Anspruch 1, **dadurch gekennzeichnet, dass** die Diffusionssperrschicht (20) zu wenigstens 50% aus SnOₓ besteht und der Restbestandteil ZnOₓ ist.

4. Temperbares Schichtsystem nach Anspruch 3, **dadurch gekennzeichnet, dass** die Diffusionssperrschicht (20) zu wenigstens 50% aus SnOₓ besteht und der Restbestandteil ZnAlOₓ ist.

5. Temperbares Schichtsystem nach Anspruch 1, **dadurch gekennzeichnet, dass** die Diffusionssperrschicht (20), der Unterblocker (50) und/oder der Oberblocker (70) aus ZnAlOₓ bestehen.

6. Temperbares Schichtsystem nach einem oder mehreren der vorangegangenen Ansprüche, **dadurch gekennzeichnet, dass** die erste Entspiegelungsschicht (30) aus TiO₂ besteht.

7. Temperbares Schichtsystem nach einem oder mehreren der vorangegangenen Ansprüche 1 bis 5, **dadurch gekennzeichnet, dass** die erste Entspiegelungsschicht (30) aus Nb₂O₃ oder TiNbOₓ besteht.

8. Temperbares Schichtsystem nach einem oder mehreren der vorangegangenen Ansprüche, **dadurch gekennzeichnet, dass** die Dicke der ersten Entspiegelungsschicht (30) in der Größenordnung von 5-55nm, insbesondere bei 10-35nm liegt.

9. Temperbares Schichtsystem nach einem oder mehreren der vorangegangenen Ansprüche, **dadurch gekennzeichnet, dass** der Brechungsindex der ersten Entspiegelungsschicht (30) in der Größenordnung von n=2,2-2,6, insbesondere bei 2,5 liegt.

10. Temperbares Schichtsystem nach einem oder mehreren der vorangegangenen Ansprüche, **dadurch gekennzeichnet, dass** die zweite Entspiegelungsschicht (80) aus SnOₓ besteht.

11. Temperbares Schichtsystem nach einem oder mehreren der vorangegangenen Ansprüche, **dadurch gekennzeichnet, dass** die Dicke der zweiten Entspiegelungsschicht (80) in der Größenordnung von 20-60nm, insbesondere bei 25-45nm liegt.

12. Temperbares Schichtsystem nach einem oder mehreren der vorangegangenen Ansprüche, **dadurch gekennzeichnet, dass** der Brechungsindex der zweiten Entspiegelungsschicht (80) in der Größenordnung von nm1,8-2,2, insbesondere bei 2,0 liegt.

13. Temperbares Schichtsystem nach einem oder mehreren der vorangegangenen Ansprüche, **dadurch gekennzeichnet, dass** die Dicke der Diffusionssperrschicht (20) in der Größenordnung von 5-15nm liegt.

14. Temperbares Schichtsystem nach einem oder mehreren der vorangegangenen Ansprüche, **dadurch gekennzeichnet, dass** die Dicke des Oberblockers (70) in der Größenordnung von 4-25nm liegt.

15. Temperbares Schichtsystem nach einem oder mehreren der vorangegangenen Ansprüche, **dadurch gekennzeichnet, dass** über der zweiten Entspiegelungsschicht (80) eine Schutzschicht (90) gegen mechanische und/oder chemische Einflüsse angeordnet ist.

16. Temperbares Schichtsystem nach Anspruch 15, **dadurch gekennzeichnet, dass** die Schutzschicht (90) aus ZnSnAlOₓ besteht.

17. Temperbares Schichtsystem nach einem oder mehreren der vorangegangenen Ansprüche, **dadurch gekennzeichnet, dass** sich oberhalb der zweiten Entspiegelungsschicht (80) eine zweite Silberschicht befindet, wobei zwischen der Entspiegelungsschicht (80) und der zweiten Silberschicht vom Substrat (10) ausgehend wenigstens ein Unterblocker aus ZnAlO_{X} angeordnet ist, und von dem Substrat (10) ausgehend über der zweiten Silberschicht wenigstens ein zweiter Oberblocker aus ZnAlOₓ und eine dritte Entspiegelungsschicht aus SnOₓ angeordnet sind.

18. Temperbares Schichtsystem nach Anspruch 17, **dadurch gekennzeichnet, dass** sich über der dritten Entspiegelungsschicht aus SnOₓ eine Schutzschicht aus ZnSnAlOₓ befindet.

19. Verfahren zur Herstellung eines temperbaren Low-e-Schichtsystems auf einem Substrat (10), **gekennzeichnet durch** wenigstens folgende Schritte:
- Bereitstellen eines Substrats (10);
- Aufbringen einer Diffusionssperrschicht (20), die zu wenigstens 50% aus SnOₓ besteht oder deren Hauptbestandteil ZnOₓ oder ZnAlOₓ ist;
- Aufbringen einer ersten Entspiegelungsschicht (30);
- Aufbringen einer inneren Diffusionssperrschicht (40) aus SnOₓ;
- Aufbringen eines Unterblockers (50), dessen Hauptbestandteil ZnOₓ ist;
- Aufbringen einer Silberschicht (60);
- Aufbringen eines Oberblockers (70), dessen Hauptbestandteil ZnOₓ ist;
- Aufbringen einer zweiten Entspiegelungsschicht (80), wobei die erste Entspiegelungsschicht (30) einen höheren Brechungsindex aufweist als die zweite.

20. Verfahren nach Anspruch 19, **dadurch gekennzeichnet, dass** eine Diffusionssperrschicht (20) aufgebracht wird, die zu 100% aus SnOₓ besteht.

21. Verfahren nach Anspruch 19, **dadurch gekennzeichnet, dass** eine Diffusionssperrschicht (20) aufgebracht wird, die zu wenigstens 50% aus SnOₓ und einem Restbestandteil ZnOₓ oder ZnAlOₓ besteht.

22. Verfahren nach einem oder mehreren der vorangegangenen Ansprüche 19 bis 21, **dadurch gekennzeichnet, dass** über der zweiten Entspiegelungsschicht (80) eine Schutzschicht (90) aus ZnSnAlOₓ aufgebracht wird.

23. Verfahren nach einem oder mehreren der Ansprüche 19 bis 22, **dadurch gekennzeichnet, dass** die Diffusionssperrschicht (20), der Unterblocker (50) und/oder der Oberblocker (70) durch Sputtern aufgebracht werden.

24. Low-e-Glasprodukt mit einem Schichtsystem auf einem Substrat (10), wobei das Schichtsystem wenigstens eine Silberschicht (60) aufweist, **dadurch gekennzeichnet, dass** von dem Substrat (10) ausgehend unter der Silberschicht (60) wenigstens eine Diffusionssperrschicht (20), eine erste Entspiegelungsschicht (30), eine innere Diffusionssperrschicht (40) aus SnOₓ und ein Unterblocker (50) angeordnet sind, und von dem Substrat (10) ausgehend über der Silberschicht (60) wenigstens ein Oberblocker (70) und eine zweite Entspiegelungsschicht (80) angeordnet sind, wobei die erste Entspiegelungsschicht (30) einen höheren Brechungsindex aufweist als die zweite Entspiegelungsschicht (80), der Hauptbestandteil sowohl des Unterblockers (50) als auch des Oberblockers (70) ZnOₓ ist und die Diffusionssperrschicht (20) zu wenigstens 50% aus SnOₓ besteht oder ihr Hauptbestandteil ZnOₓ ist.

25. Low-e-Glasprodukt nach Anspruch 24, **dadurch gekennzeichnet, dass** das Schichtsystem mit einem Verfahren nach einem oder mehreren der Ansprüche 19 bis 23 hergestellt wurde.

26. Low-e-Glasprodukt nach einem oder beiden der Ansprüche 24 und 25, **dadurch gekennzeichnet, dass** das Schichtsystem getempert wurde.

## Claims

1. A temperable low-e layer system that can be applied onto a substrate (10) and that has a layer structure with at least one silver layer (60), **characterized in that**, starting from the substrate (10), at least one diffusion barrier layer (20), a first antireflective layer (30), an inner diffusion barrier layer (40) consisting of SnOₓ and an underblocker (50) are arranged under the silver layer (60), and, starting from the substrate (10), at least one overblocker (70) and a second antireflective layer (80) are arranged over the silver layer (60), whereby the first antireflective layer (30) has a higher index of refraction than the second antireflective layer (80), the main constituent of the underblocker (50) as well as of the overblocker (70) is ZnOₓ, and the diffusion barrier layer (20) consists of at least 50% SnOₓ, or else its main constituent is ZnOₓ.

2. The temperable layer system according to Claim 1, **characterized in that** the diffusion barrier layer (20) consists 100% of SnOₓ.

3. The temperable layer system according to Claim 1, **characterized in that** the diffusion barrier layer (20) consists at least of 50% SnOₓ, and the remaining portion is ZnOₓ.

4. The temperable layer system according to Claim 3, **characterized in that** the diffusion barrier layer (20) consists at least of 50% SnOₓ, and the remaining portion is ZnAloₓ.

5. The temperable layer system according to Claim 1, **characterized in that** the diffusion barrier layer (20), the underblocker (50) and/or the overblocker (70) consist of ZnAlOₓ.

6. The temperable layer system according to one or more of the preceding claims, **characterized in that** the first antireflective layer (30) consists of TiO₂.

7. The temperable layer system according to one or more of the preceding Claims 1 to 5, **characterized in that** the first antireflective layer (30) consists of Nb₂O₃ or TiNbOₓ.

8. The temperable layer system according to one or more of the preceding claims, **characterized in that** the thickness of the first antireflective layer (30) is in the order of magnitude of 5 nm to 55 nm, especially 10 nm to 35 nm.

9. The temperable layer system according to one or more of the preceding claims, **characterized in that** the index of refraction of the first antireflective layer (30) is in the order of magnitude of n = 2.2 to 2.6, especially 2.5.

10. The temperable layer system according to one or more of the preceding claims, **characterized in that** the second antireflective layer (80) consists of SnOₓ.

11. The temperable layer system according to one or more of the preceding claims, **characterized in that** the thickness of the second antireflective layer (80) is in the order of magnitude of 20 nm to 60 nm, especially 25 nm to 45 nm.

12. The temperable layer system according to one or more of the preceding claims, **characterized in that** the index of refraction of the second antireflective layer (80) is in the order of magnitude of n = 1.8 to 2.2, especially 2.0.

13. The temperable layer system according to one or more of the preceding claims, **characterized in that** the thickness of the diffusion barrier layer (20) is in the order of magnitude of 5 nm to 15 nm.

14. The temperable layer system according to one or more of the preceding claims, **characterized in that** the thickness of the overblocker (70) is in the order of magnitude of 4 nm to 25 nm.

15. The temperable layer system according to one or more of the preceding claims, **characterized in that** a protective layer (90) against mechanical and/or chemical influences is arranged over the second antireflective layer (80).

16. The temperable layer system according to Claim 15, **characterized in that** the protective layer (90) consists of ZnSnAlOₓ.

17. The temperable layer system according to one or more of the preceding claims, **characterized in that** a second silver layer is situated over the second antireflective layer (80), whereby, starting from the substrate (10), at least one underblocker consisting of ZnAlOₓ is arranged between the antireflective layer (80) and the second silver layer and, starting from the substrate (10), at least a second overblocker consisting of ZnAlOₓ and a third antireflective layer consisting of SnOₓ are arranged over the second silver layer.

18. The temperable layer system according to Claim 17, **characterized in that** a protective layer of ZnSnAlOₓ is situated over the third antireflective layer consisting of SnOₓ.

19. A method for the production of a temperable low-e layer system on a substrate (10), **characterized by** at least the following steps:
• provision of a substrate (10) ;
• application of a diffusion barrier layer (20) consisting at least of 50% SnOₓ or of its main constituent ZnOₓ or ZnAlOₓ;
• application of a first antireflective layer (30);
• application of an inner diffusion barrier layer (40) consisting of SnOₓ;
• application of an underblocker (50) whose main constituent is ZnOₓ;
• application of a silver layer (60);
• application of an overblocker (70) whose main constituent is ZnOₓ;
• application of a second antireflective layer (80), whereby the first antireflective layer (30) has a higher index of refraction than the second one.

20. The method according to Claim 19, **characterized in that** a diffusion barrier layer (20) is applied that consists 100% of SnOₓ.

21. The method according to Claim 19, **characterized in that** a diffusion barrier layer (20) is applied that consists at least of 50% SnOₓ and a remaining portion of ZnOₓ or ZnAlOₓ.

22. The method according to one or more of the preceding Claims 19 to 21, **characterized in that** a protective layer (90) consisting of ZnSnAlOₓ is applied onto the second antireflective layer (80).

23. The method according to one or more of Claims 19 to 22, **characterized in that** the diffusion barrier layer (20), the underblocker (50) and/or the overblocker (70) are applied by means of sputtering.

24. A low-e glass product having a layer system on a substrate (10), whereby the layer system has at least one silver layer (60), **characterized in that,** starting from the substrate (10), at least one diffusion barrier layer (20), a first antireflective layer (30), an inner diffusion barrier layer (40) consisting of SnOₓ and an underblocker (50) are arranged under the silver layer (60), and, starting from the substrate (10), at least one overblocker (70) and a second antireflective layer (80) are arranged over the silver layer (60), whereby the first antireflective layer (30) has a higher index of refraction than the second antireflective layer (80), the main constituent of the underblocker (50) as well as of the overblocker (70) is ZnOₓ, and the diffusion barrier layer (20) consists of at least 50% SnOₓ, or else its main constituent is ZnOₓ.

25. The low-e glass product according to Claim 24, **characterized in that** the layer system was produced employing a method according to one or more of Claims 19 to 23.

26. The low-e glass product according to one or both of Claims 24 and 25, **characterized in that** the layer system was tempered.

## Revendications

1. Système de couches à basse émissivité trempable, pouvant être posé sur un substrat (10) et présentant une structure de couches avec au moins une couche d'argent (60), **caractérisé en ce que** sont situées, en partant du substrat (10), en dessous de la couche d'argent (60), au moins une couche antidiffusion (20), une première couche antireflet (30), une couche antidiffusion interne (40) en SnOₓ et une couche bloquante inférieure (50) et, en partant du substrat (10), au-dessus de la couche d'argent (60), au moins une couche bloquante supérieure (70) et une deuxième couche antireflet (80), la première couche antireflet (30) présentant un indice de réfraction supérieur à celui de la deuxième couche antireflet (80), le composant principal non seulement de la couche bloquante inférieure (50), mais aussi de la couche bloquante supérieure (70) étant du ZnOₓ et la couche antidiffusion (20) étant composée de SnOₓ à raison d'au moins 50% ou son composant principal étant du ZnOₓ.

2. Système de couches trempable selon la revendication 1, **caractérisé en ce que** la couche antidiffusion (20) est composée de SnOₓ à raison de 100%.

3. Système de couches trempable selon la revendication 1, **caractérisé en ce que** la couche antidiffusion (20) est composée de SnOₓ à raison d'au moins 50%, le reste étant du ZnOₓ.

4. Système de couches trempable selon la revendication 3, **caractérisé en ce que** la couche antidiffusion (20) est composée de SnOₓ à raison d'au moins 50%, le reste étant du ZnAlOₓ.

5. Système de couches trempable selon la revendication 1, **caractérisé en ce que** la couche antidiffusion (20), la couche bloquante inférieure (50) et/ou la couche bloquante supérieure (70) sont composées de ZnAlOₓ.

6. Système de couches trempable selon l'une ou plusieurs des revendications précédentes, **caractérisé en ce que** la première couche antireflet (30) est composée de TiO₂.

7. Système de couches trempable selon l'une ou plusieurs des revendications précédentes 1 à 5, **caractérisé en ce que** la première couche antireflet (30) est composée de Nb₂O₃ ou de TiNbOₓ.

8. Système de couches trempable selon l'une ou plusieurs des revendications précédentes, **caractérisé en ce que** l'épaisseur de la première couche antireflet (30) est de l'ordre de 5 à 55 nm et est plus particulièrement de 10 à 35 nm.

9. Système de couches trempable selon l'une ou plusieurs des revendications précédentes, **caractérisé en ce que** l'indice de réfraction de la première couche antireflet (30) est de l'ordre de n = 2,2 à 2,6 et est plus particulièrement de 2,5.

10. Système de couches trempable selon l'une ou plusieurs des revendications précédentes, **caractérisé en ce que** la deuxième couche antireflet (80) est composée de SnOₓ.

11. Système de couches trempable selon l'une ou plusieurs des revendications précédentes, **caractérisé en ce que** l'épaisseur de la deuxième couche antireflet (80) est de l'ordre de 20 à 60 nm et est plus particulièrement de 25 à 45 nm.

12. Système de couches trempable selon l'une ou plusieurs des revendications précédentes, **caractérisé en ce que** l'indice de réfraction de la deuxième couche antireflet (80) est de l'ordre de n = 1,8 à 2,2 et est plus particulièrement de 2,0.

13. Système de couches trempable selon l'une ou plusieurs des revendications précédentes, **caractérisé en ce que** l'épaisseur de la couche antidiffusion (20) est de l'ordre de 5 à 15 nm.

14. Système de couches trempable selon l'une ou plusieurs des revendications précédentes, **caractérisé en ce que** l'épaisseur de la couche bloquante supérieure (70) est de l'ordre de 4 à 25 nm.

15. Système de couches trempable selon l'une ou plusieurs des revendications précédentes, **caractérisé en ce qu'**une couche de protection (90) contre les influences mécaniques et/ou chimiques est située au-dessus de la deuxième couche antireflet (80).

16. Système de couches trempable selon la revendication 15, **caractérisé en ce que** la couche de protection (90) est composée de ZnSnAlOₓ.

17. Système de couches trempable selon l'une ou plusieurs des revendications précédentes, **caractérisé en ce qu'**une deuxième couche d'argent se trouve au-dessus de la deuxième couche antireflet (80), au moins une couche bloquante inférieure en ZnAlOₓ étant, en partant du substrat (10), située entre la couche antireflet (80) et la deuxième couche d'argent et au moins une deuxième couche bloquante supérieure en ZnAlOₓ et une troisième couche antireflet en SnOₓ étant, en partant du substrat (10), situées au-dessus de la deuxième couche d'argent.

18. Système de couches trempable selon la revendication 17, **caractérisé en ce qu'**une couche de protection (90) en ZnSnAlOₓ se trouve au-dessus de la troisième couche antireflet en SnOₓ.

19. Procédé de fabrication d'un système de couches à basse émissivité trempable sur un substrat (10), **caractérisé par** au moins les étapes suivantes:
- mise à disposition d'un substrat (10),
- application d'une couche antidiffusion (20) qui est composée de SnOₓ à raison d'au moins 50% ou dont le composant principal est du ZnOₓ ou du ZnAlOₓ,
- application d'une première couche antireflet (30),
- application d'une couche antidiffusion interne (40) en SnOₓ,
- application d'une couche bloquante inférieure (50) dont le composant principal est du ZnOₓ,
- application d'une couche d'argent (60),
- application d'une couche bloquante supérieure (70) dont le composant principal est du ZnOₓ,
- application d'une deuxième couche antireflet (80), la première couche antireflet (30) présentant un indice de réfraction supérieur à celui de la deuxième.

20. Procédé selon la revendication 19, **caractérisé par** l'application d'une couche antidiffusion (20) qui est composée de SnOₓ à 100%.

21. Procédé selon la revendication 19, **caractérisé par** l'application d'une couche antidiffusion (20) qui est composée de SnOₓ à raison d'au moins 50%, le reste consistant en ZnOₓ ou ZnAlOₓ.

22. Procédé selon l'une ou plusieurs des revendications précédentes 19 à 21, **caractérisé par** l'application d'une couche de protection (90) en ZnSnAlOₓ au-dessus de la deuxième couche antireflet (80).

23. Procédé selon l'une ou plusieurs des revendications 19 à 22, **caractérisé en ce que** la couche antidiffusion (20), la couche bloquante inférieure (50) et/ou la couche bloquante supérieure (70) sont appliquées par pulvérisation cathodique.

24. Produit en verre à basse émissivité comportant un système de couches sur un substrat (10), le système de couches comportant au moins une couche d'argent (60), **caractérisé en ce que** sont situées, en partant du substrat (10), en dessous de la couche d'argent (60), au moins une couche antidiffusion (20), une première couche antireflet (30), une couche antidiffusion interne (40) en SnOₓ et une couche bloquante inférieure (50) et, en partant du substrat (10), au-dessus de la couche d'argent (60), au moins une couche bloquante supérieure (70) et une deuxième couche antireflet (80), la première couche antireflet (30) présentant un indice de réfraction supérieur à celui de la deuxième couche antireflet (80), le composant principal non seulement de la couche bloquante inférieure (50), mais aussi de la couche bloquante supérieure (70) étant du ZnOₓ et la couche antidiffusion (20) étant composée de SnOₓ à raison d'au moins 50% ou son composant principal étant du ZnOₓ.

25. Produit en verre à basse émissivité selon la revendication 24, **caractérisé en ce que** le système de couches a été réalisé par un procédé selon l'une ou plusieurs des revendications 19 à 23.

26. Produit en verre à basse émissivité selon l'un ou les deux revendications 24 et 25, **caractérisé en ce que** le système de couches a subi un trempage.
